Europäisches Patentamt

European Patent Office

Office européen des brevets

(11) Publication number: **0 389 271**
**A2**

# EUROPEAN PATENT APPLICATION

(21) Application number: **90303058.3**

(51) Int. Cl.5: **G06F 15/40**

(22) Date of filing: **21.03.90**

(30) Priority: **24.03.89 JP 70442/89**

(43) Date of publication of application:
**26.09.90 Bulletin 90/39**

(84) Designated Contracting States:
**DE FR GB**

(71) Applicant: **International Business Machines
Corporation
Old Orchard Road
Armonk, N.Y. 10504(US)**

(72) Inventor: **Itoh, Nobuyasu
Rejidensu Wakoh 302goh, 27-1
Shimosakunobe
Takatsu-ku, Tawasaki-shi, Kanagawa-ken(JP)**

(74) Representative: **Atchley, Martin John
Waldegrave
IBM United Kingdom Limited Intellectual
Property Department Hursley Park
Winchester Hampshire SO21 2JN(GB)**

(54) **Matching sequences of labels representing input data and stored data utilising dynamic
programming.**

(57) The invention relates to an apparatus for matching label sequences representing input data with label
sequences representing stored data comprising:

a) a storage device (12),

b) means for receiving the label sequences representing stored data and forming a tree-structured
dictionary where each label corresponds to a respective node, storing it in the storage device and providing
each label node in the tree-structure dictionary with a buffer area in the storage device,

c) means for repeatedly selecting a node in the tree-structured dictionary in the direction of depth,
performing a stage calculation between the label corresponding to the selected node and an input label
sequence and storing the result in the buffer provided for the selected node and repeating these operations,
and

d) means for obtaining, after the performance of the stage calculation for the node which corresponds
to the end of one template, a distance between the template and the input label sequence based on the
stage calculation result obtained for the end node and storing it with the identification data of the template
as solution candidate information into the storage device.

According to the invention, the apparatus is characterised in that the means for repeatedly performing
operations on selected nodes comprises

c1) means for performing the stage calculation for the selected node by referring to the stage
calculation result stored in the buffer for an immediate ancestor node of the selected node,

c2) means for determining a label in the input label sequence providing the minimum value of the
stage calculation result, and

c3) means for determining a label having the minimum distance from the label immediately after the
label determined in the operation defined in (c2) in the input label sequence from labels corresponding to a
descendant node(s) of the selected node and selection of the node of the determined label as a node for a
next stage calculation.

B

FORMATION OF
TREE-STRUCTURED
DICTIONARY

A

TREE-STRUCTURED
DICTIONARY                    11

PATH ID

DISTANCE

SOLUTION
CANDIDATE
INFORMATION

12

DP CALCULATION

NODE SELECTION                13

EXECUTION OF
STAGE CALCULATION             14

DECISION FOR
ABORTING STAGE
CALCULATION                   15

UPDATE OF SOLUTION
CANDIDATE INFORMATION          16

FIG. 1

## MATCHING SEQUENCES OF LABELS REPRESENTING INPUT DATA AND STORED DATA UTILISING DYNAMIC PROGRAMMING

The present invention relates to a method and an apparatus for matching label sequences representing input data and stored data usable in the fields of character recognition, speech recognition, spelling check, data base query for synonyms or the like and utilising dynamic programming.

In the field of speech recognition or of character recognition, one method which has been most generally executed is that in which features are extracted from input relating to speech or characters to be recognised. Features are represented as an ordered label sequence and compared with each of a set of label sequences previously prepared in a recognition dictionary (referred to as templates hereinafter) and the category of the most similar (minimum distances from the input feature sequence) stored sequence is decided to be a solution.

In the case of a spelling check, a data base query for synonyms or the like, an input character is regarded as one label and the label sequence (namely, single word) having a minimum distance from the input sequence is selected from a word dictionary or a data base storing moving label sequences, so that the approximate matching of the label sequences is obtained in the same manner as set forth above.

In this case, since the correspondence between the respective labels is not generally known (except that a relative position of each label is not reversible), it is required to define a solution by a distance having the minimum value from all possible mappings. One of the methods for calculating this distance at high speed is to utilise dynamic programming. This has many modified forms and is most typically formulated as follows.

Two label sequences to be compared are assumed to be $A = a_1, a_2, ..., a_n$, and $B = b_1, b_2, ..., b_m$. If the mapping or joining function of the labels in the comparison operation is expressed by cp(k) and (k = 1, ..., K, where, $c_p(k)$ represents a pair of labels ($a_{ik}$, $b_{jk}$) and means that $a_{ik}$ and $b_{ik}$ are joined), the distance D between A and B can be defined as

$$D(A, B) = \min_{c_p} \sum_{k=1}^{K} d(c_p(k)) \cdot w(k) / \sum_{k=1}^{K} w(k) \quad ...... \quad (1)$$

$d(c_p(k))$ indicates the distance between $a_{ik}$ and $b_{ik}$. $w(k)$ indicates a distance along the path of the mapping function. There are various types of $w(k)$. For instance, when dynamic programming is applied by regarding $w(k)$ as $w(k) = (i_k - i_{k-1}) + (j_k - j_{k-1})$, D(A, B) can be calculated as $g(n, m)/(n + m)$ by the following recurrence formula $g(i-1, j)$.

$$g(i, j) = \min \begin{bmatrix} g(i-1, i) + d(a_i, b_j) \\ g(i-1, j-1) + 2 \times d(a_i, b_j) \\ g(i, j-1) + d(a_i, b_j) \end{bmatrix} \quad ..... \quad (2)$$

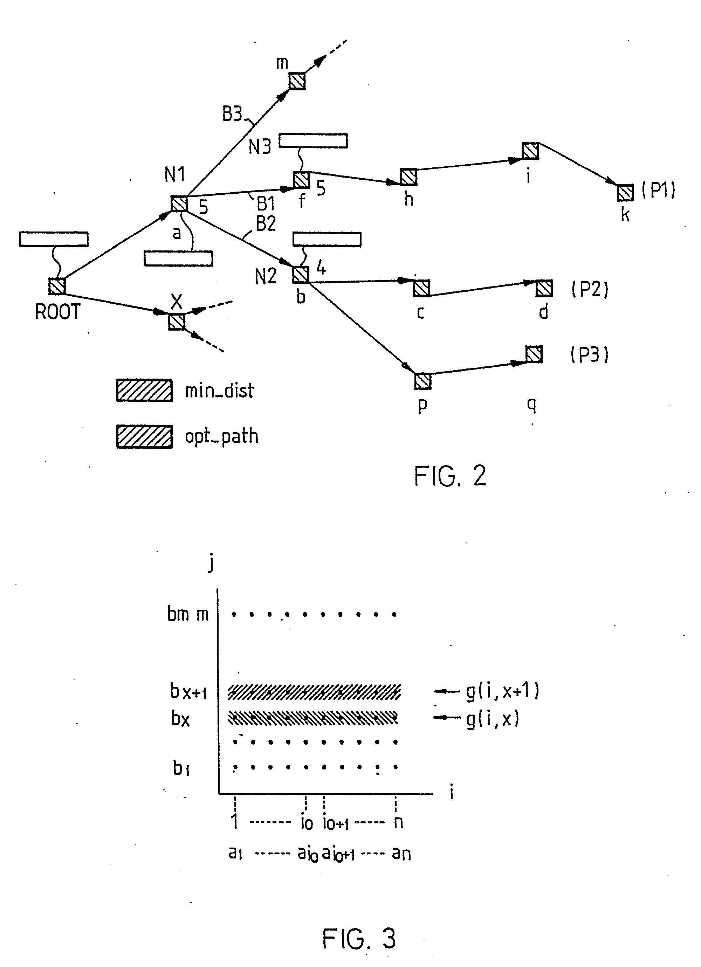

As illustrated in Figure 3 in which the horizontal axis represents an input label sequence and the vertical axis represents a stored label sequence, in order to obtain g(n, m), g(i, j) for respective lattice points (m x n points) satisfying ($1 \leq i \leq n$, $1 \leq j \leq m$) on the plane of (i, j) is calculated. Generally, the calculation of the furmula (2) is executed with one of the parameters i, j fixed and the other incremented. When the calculation is completed, the fixed parameter is increased by 1 and the calculation process is repeated. A calculation executed with only one parameter increased is called a one stage calculation and the calculation itself will be called a stage calculation hereinafter. In this case, either parameter may be fixed. However, in the explanation hereinafter, an i axis will be regarded as an input label sequence and a j axis will be regarded as a stored label sequence to be compared in a dictionary. Thus, the stage calculation will be executed with j fixed (Figure 3).

In this dynamic programming operation the stored label sequence exhibiting the minimum distance can be obtained by performing steps of m x n at most. Therefore, the magnitude of the calculation process can be reduced. Since the number of the templates (stored label sequences) to be compared or the words to be retrieved in the dictionary is, however, generally rather large, and the distance between each of them and the input label sequence has to be calculated, the problem of calculation speed still remains.

In order to overcome this problem, methods roughly classifiable into two groups have been developed. The methods of each group and the related problems will be described below.

(a) Beam Search

As will be apparent from the foregoing description, the calculation of $m$ stages in total is required in order to carry out the dynamic programming calculation between the input label sequence and one label sequence in the dictionary. Thus, when a method is performed in which the calculation is carried out stage by stage for every template and a succeeding stage calculation is not performed for the template exhibiting a low probability of exhibiting the minimum distance instead of performing every stage calculation for every template, it can be expected that the number of calculations for performing the recurrence formula will be reduced and the calculation speed will be improved because the calculation of succeeding stages is performed only for the remaining templates. This method is called a beam search. As for a reference based on which the stage calculation is aborted, such methods have been proposed as N highest templates are retained at each time, or the stage calculation is aborted when $g(i, j)$ exceeds a threshold function of $t(j)$ = $a \cdot j + b$ (a, b are constant coefficients) since $g(i, j)$ is the amount of accumulation for j. In either case, however, a low probability of exhibiting the minimum distance is a reason for abortion of the stage calculation, so that the minimum value of the distance obtained as a result is only an approximate solution and not necessarily the optimum solution. It is understood that when the reference for aborting the stage calculation is high, the obtained solution becomes optimum. However, it is contrary to the aim of the beam search and the remarkable improvement of speed cannot be expected.

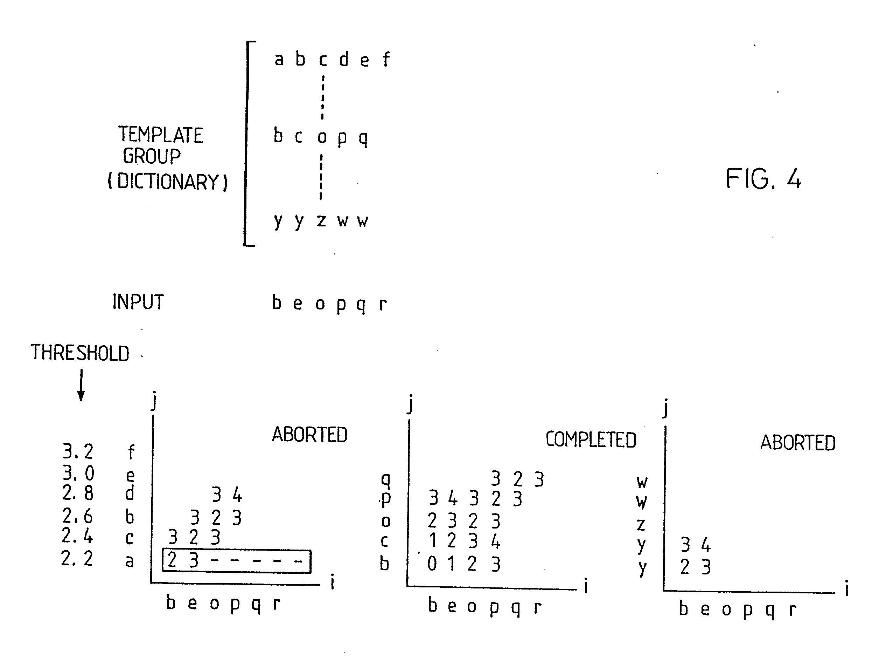

With reference to Figure 4, an example of the beam search will be explained. A threshold function is t $= (1/5)j + 2$. Distance functions between the labels are

$d(C_1, C_2) = 1 \quad C_1 \neq C_2$

$d(C_1, C_2) = 0 \quad C_1 = C_2$

and the equation (2) is used as the recurrence formula.

When performing a dynamic programming operation on an input label sequence "beopqr" and a template label sequence "aeodef", since the minimum value (3) in one stage exceeds a threshold (2.8) in the fourth stage, the calculation operation is aborted at this time as illustrated. The calculation operation performed between an input label sequence "beopqr" and a template label sequence "yyzww" is similarly aborted at the second stage as illustrated. On the other hand, a calculation operation performed between the input label sequence "beopqr" and a template label sequence "bcopq" is completed as illustrated.

A template label sequence which ought to be selected as an optimum solution may possibly be one of the sequences for which the dynamic programming calculation has been aborted since label sequence is not matched well with the beginning part of the input label sequence. This is the large disadvantage of the beam search.

This method is disclosed in the study by H. Ney at al., "A Data Driven Organization of the Dynamic Programming Beam Search for Continuous Speech Recognition", Proc. ICASSP 87, pp. 833-836, 1987.

(b) Stack dynamic programming

Where there are two templates used in the calculation for which the results of the $j_p$ and $j_p$ stages are the same and the $j_{p+1}$ and the $j_{q+1}$ stages are the same, the results of the stages for these sequences of labels are the same because of the characteristic of the recurrence formula (2). This indicates that when two or more templates share a common label sequence, it is not necessary to perform the calculation operation for the stage of the common label sequence for each of the templates. Thus, a method has been proposed that the label sequences shared by the templates are got together, the template group is expressed by an acyclic planar graph and the recurrence formula calculation for the shared part is executed only once. This is termed stack dynamic programming (called by this name since a stack is used for the recurrence formula calculation).

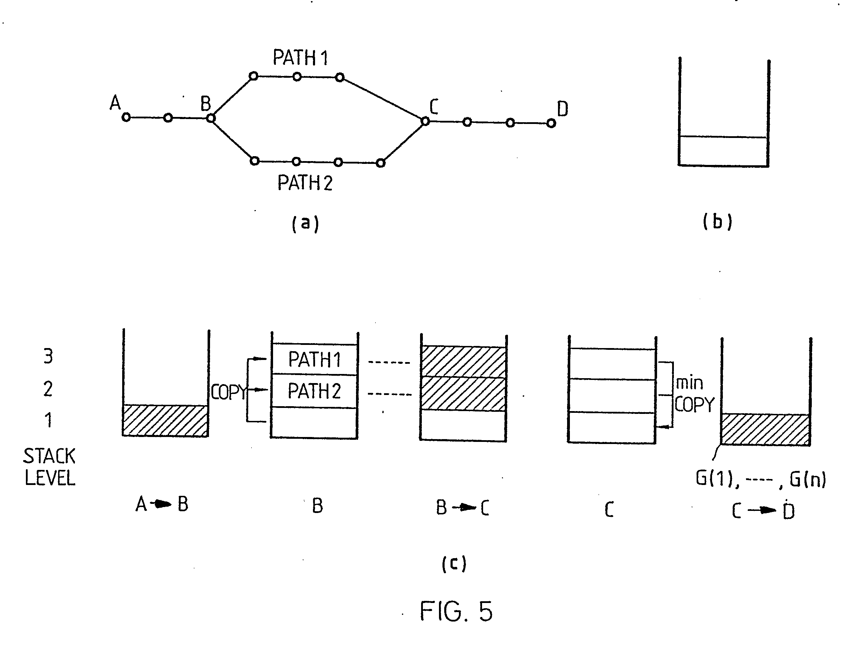

Examples of stack dynamic programming are shown in Figure 5. Part (a) of the Figure illustrates two templates having common label sequences by one graph with each node corresponding to one label. The number of branches relating to different label sequences is arbitrary and, in this example, only two branches are considered for simplicity. Part (b) of the Figure shows a stack used for the calculation and has

EP 0 389 271 A2

a capacity (width) capable of storing the calculation result of one stage. Part (c) of the Figure shows the states of the stack at successive steps of the calculation operation. Portions shown with slanting lines indicate stack levels in which the stage calculation is carried out. In stack dynamic programming, the recurrence formula calculation is performed using the stack for the respective stages sequentially along the direction of the graph (A to B). When the graph reaches a branch point (B), two new stacks are used. The result of an immediately preceding stack is copied (B), and then the respective stage calculations are carried out correspondingly to the label sequences of the respective branches (B to C). Then, when a rejoining point is reached (C), the calculation results of the two stacks are compared and the smaller one is written in the the original stack (used for the stage calculation before the branch). The recurrence formula calculation is continued (C to D) until the graph is branched again or reaches a termination, using the written stack and its value. Each time the graph is branched or connected, similar operations and calculations are performed.

When the graph reaches its termination, assuming that the values of the stage stored in the stack of a first level are G(i) (i = l,...n), G(n) indicates the distance from an optimum template (minimum distance). The detailed explanation of this method is disclosed in the study by H. Sakoe "A Generalization of Dynamic Programming Based Pattern Matching Algorithm Stack DP-Matching", Transactions of the Committee on Speech Research, The Acoustic Society of Japan, S83-23, 1983.

According to this method, it is assured that an optimum solution is constantly obtained. However, since this method presupposes that the dynamic programming calculation is basically performed for every part of the graph, the improvement of the speed in calculation derives from only the omission of the duplicated calculation in the common subsequence. Moreover, in order to form the acyclic planar graph having the shared parts most from the respective templates, an operation for obtaining the shared partial label sequences between each pair of the templates and sequentially arranging them from the longer partial sequence without contradiction is required. Therefore a high calculation cost is needed for a large number of templates and further and it is difficult to add or delete a template.

The object of the present invention is to provide an improved apparatus and method of utilising dynamic programming in an operation for comparing sequences of labels representing input data and stored data.

The present invention relates to an apparatus for matching label sequences representing input data with label sequences representing stored data comprising

(a) a storage device,

(b) means for receiving the label sequences representing stored data and forming a tree-structured dictionary where each label corresponds to a respective node, storing it in the storage device and providing each label node in the tree-structure dictionary with a buffer area in the storage device,

(c) means for repeatedly selecting a node in the tree-structured dictionary in the direction of depth, performing a stage calculation between the label corresponding to the selected node and an input label sequence and storing the result in the buffer provided for the selected node and repeating these operations, and

(d) means for obtaining, after the performance of the stage calculation for the node which corresponds to the end of one template, a distance between the template and the input label sequence based on the stage calculation result obtained for the end node and storing it with the identification data of the template as solution candidate information into the storage device.

According to the invention, the apparatus is characterised in that the means for repeatedly performing operations on selected nodes comprises

(c1) means for performing the stage calculation for the selected node by referring to the stage calculation result stored in the buffer for an immediate ancestor node of the selected node.

(c2) means for determining a label in the input label sequence providing the minimum value of the stage calculation result,

(c3) means for determining a label having the minimum distance from the label immediately after the label determined in the operation defined in (c2) in the input label sequence from labels corresponding to a descendant node(s) of the selected node and selection of the node of the determined label as a node for a next stage calculation.

The invention also relates to a method of matching label sequences representing input data with label sequences representing stored data utilising apparatus as above.

In order that the invention may be more readily understood, an embodiment will now be described with reference to the accompanying drawings in which

Figure 1 shows a label sequence matching apparatus according to the present invention,

Figure 2 illustrates one example of a tree-structured dictionary,

4

Figure 3 explains the calculation for the use of a recurrence formula in a known label sequence matching apparatus,

Figure 4 explains a beam search dynamic programming operation utilised in a known label sequence matching apparatus,

Figure 5 explains a stack dynamic programming operation utilised in a known label sequence matching apparatus,

Figure 6 is a flow chart of a process of forming a tree-structured dictionary,

Figure 7 is a flow chart of a dynamic programming calculation performed in each node of the tree structured dictionary in Figure 6,

Figure 8 is a flow chart showing the entirety of a dynamic programming calculation,

Figure 9 illustrates mappings permitted in the calculation for a recurrence formula used in the apparatus described,

Figure 10 illustrates an example of another tree-structured dictionary,

Figure 11 explains processes for performing stage calculation according to the tree-structured dictionary illustrated in Figure 10, and

Figures 12(a) and (b) show examples of the mapping of an input label sequence and a template.

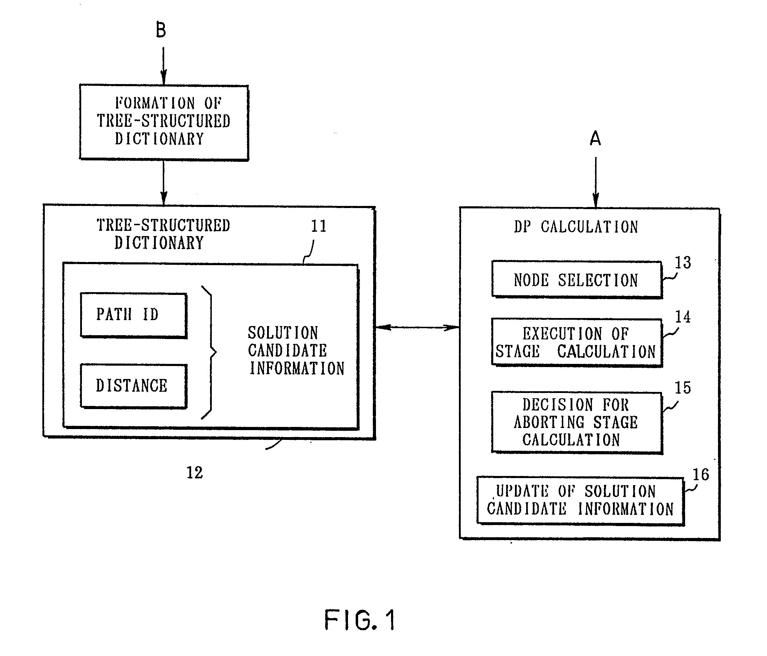

Figure 1 is a block diagram of label sequence matching apparatus according to the invention.

A denotes an input label sequence and B denotes one of the templates in a dictionary each consisting of a label sequence as described above. The input label sequence may be supplied from a character recognition unit or a speech recognition unit for example. Assuming that the values of an xth stage are obtained, it is apparent that all the values ($g(i, x+1)$) of an $x+1$th stage are obtained from those values, $B_{x+1}$ and the input label sequence A (refer to Figure 3) because of the characteristic of the recurrence formula. In view of this, the respective templates are designed to be represented by a tree structure where each node corresponds to a label and each access path corresponds to one template.

For instance, when three label sequences "abcd", "afhik", "abpq" are used, a tree as shown in Figure 2 is obtained. At each of the nodes (N1, N2, N3, ...), the label sequence leading thereto, the label sequence leading therefrom and pointers to the nodes, and the maximum value of the length (the number of levels counted from root) of the access path(s) traceable from each node are described. It is indicated in Figure 2 that the maximum lengths of the access paths for "a" and "f" are 5 and the maximum length of the access path for "b" is 4. An identifier is provided for each access path (P1, P2, P3, ...).

The storage device for the data of each node is provided with a storage buffer having "n" arrays (each capable of storing the calculation result of one stage) where the result ($g(i,$ nest) with nest being the number of levels counted from the root) of the stage corresponding to the node is stored. For example, in the node N2, $g(i, 2)$ for the templates "abcd" and "abpq" is stored (in this case, it should be noted that $g(i, j)$ ($j=1$, ..., nest) is common to the templates having a common sequence of labels leading to the node in question). Such a tree-structure and the buffers are employed together with the foregoing characteristic of the recurrence formula. Thereby, the stage calculation in each node can be carried out from the values in the buffer corresponding to a parent node and the label described in the node.

Further, a locally best next branch, that is, template group, can be selected using the values in the buffer associated with a node. Various definitions of the best branch are of course conceivable. For instance, assuming that in $g(i,$ nest) the function of "i" takes a minimum value when $i = i_0$, the branch having the minimum distance from $a_{i_0+1}$ can be regarded as the best one. Since the distance from the template group corresponding to the access path in question is above $g(i_0,$ nest)/(n + the maximum length of the access path following the current node) at least, the access path following the current node cannot have the minimum distance if another access path having a smaller distance than the value of the distance mentioned above has already been detected. The stage calculation for the following branch may therefore be aborted.

The main point of the arrangement described resides in that while constantly selecting the locally best branch, a tree is searched in a depth first manner and the access path corresponding to the template having the minimum distance is reached as early as possible. Further, the minimum distance at respective points of time and the access path thereof are stored in global variables min_dist and opt_path (shown in Figure 2) so as to abort the stage calculation of the path following the node in question when the intermediate result of the recurrence formula exceeds the value of min_dist.

In the arrangement described, a method for forming a tree-structured dictionary will be explained first and a method for a dynamic programming matching calculation using the dictionary will be described thereafter.

(a) Formation of Tree-Structured Dictionary from Multi Label Sequences

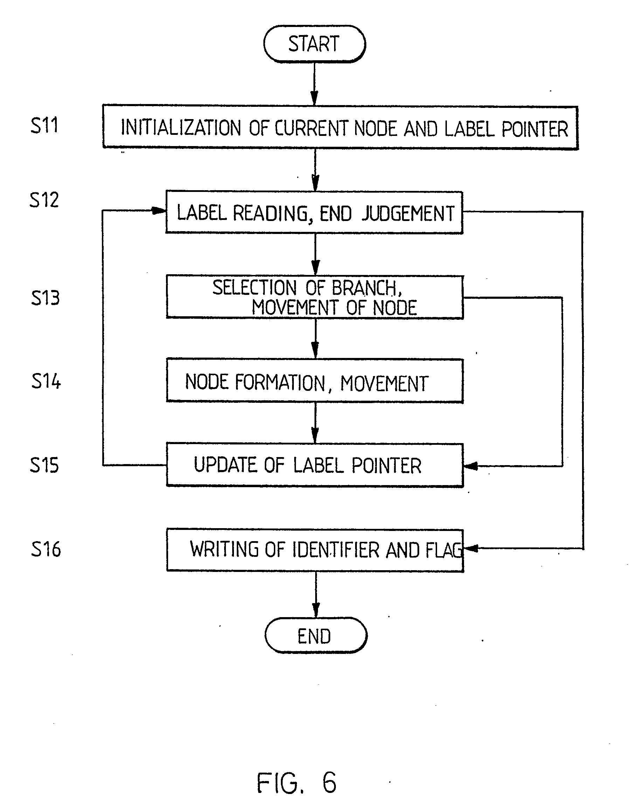

The formation of the above-mentioned dictionary is performed by sequentially adding branches corresponding to the respective label sequences to a dictionary having a root but no branches. The process required for the addition of branches will be described first and the formation of the dictionary and the deletion of the label sequences will be referred to later (refer to Figure 6).

STEP S11

Place the label pointer (i) at the head of a sequence to be added (i <- 1).

Place a current node at a root node.

STEP S12

Read the label ($b_i$) indicated by the label pointer. If the label sequence ends and there is no label to be read, go to STEP S16 (end condition).

STEP S13

If a branch corresponding to the label $b_i$ is continued from the current node, move the current node to the descendant node following the branch and then go to STEP S15. If a pertinent branch is not present, go to STEP S14.

STEP S14

Extend the branch corresponding to the label $b_i$ from the current node and create a new node following it. Move the current node to the new node and then go to STEP S15.

STEP S15

Advance the label pointer by one (i <- i + 1). Go to STEP S12.

A buffer is provided as the node is formed. The buffer may be situated outside the node and connected to the node by the pointer, or included in the node.

STEP S16

Write a flag indicating that the current node is the end of the added label sequence and the identifier of the corresponding sequence in the current node in question (processing ends).

As described above, a dictionary is formed by taking out label sequences one by one from a sequence set which includes multi label sequences (order of taking out the label sequences may be arbitrary) and repeating the processing operations of steps S11 to S16. In the case of deleting a sequence, the process of tracing the corresponding branch while reading sequentially the labels from the label sequence in question is the same as that for adding a sequence, except that the end condition is that the number of the label sequences which correspond to the descendant of the current node is only one and the end processing is that the branch in question (part succeeding the current node) is deleted.

(b) Dynamic Programming Matching Calculation

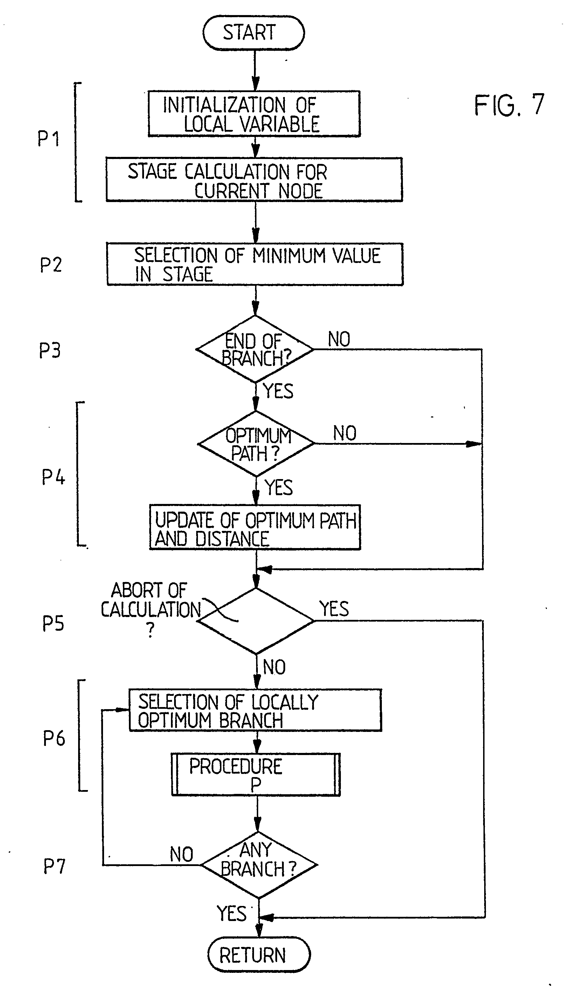

The procedure of the dynamic programming matching calculation which is the main part of the arrangement being described will now be described with reference to Figure 6 and Figure 7. A procedure P performed for one node will be first explained and a process in which the procedure P is called and the dynamic programming calculation is executed will be described thereafter.

Procedure P

This procedure is recursively called together with three arguments, namely, a pointer (arg1) to a parent node, a pointer (arg2) to a current node performing the stage calculation, and the number (arg3) of levels counted from the root of a tree. Figure 7 shows the sequence of processing the present procedure P performed for each node.

STEP P1

The value of a variable nest is arg3.

The value of a variable max__nest is the maximum length of the access path(s) following the current node.

Calculate g(i, nest) of the current node for each i(i = l, ..., n) from the stage calculation result g(i, nest-l) stored in the buffer of the parent node based on the recurrence formula (2) and store in the buffer corresponding to the current node.

STEP P2

Obtain the value $i_0$, namely i for giving the minimum value among the values (vector) g(i, nest) obtained in STEP P1 (refer to Figure 3).

STEP P3

If the current node is at the end of a branch of the tree, go to STEP P4.

If it is not at the end, go to P5.

In the connection, "end" referred to herein means a node where one template is ended, and is not necessarily an end in the tree structure. For instance, when there are templates "pqr" and "pqrs", "r" is a node where one template is ended but it is not at an end of the tree structure. Whether a node is an end or not is judged from the flag information provided in STEP S16.

STEP P4

If g(n, nest)/(n + nest) of the current node is smaller than min__dist, update min__dist with g(n, nest)-/(n + nest) and opt__path with the template corresponding to the path from the root of the tree to the current node.

STEP P5

If $g(i_o, nest)/(n + max\_nest)$ is larger than min__dist, abort the following calculation and return to a caller. "return" means a back track and indicates a return to an immediate ancestor node in this embodiment.

STEP P6

Select the branch having the minimum distance from $a_{i_0} + 1$, next node, from unselected branches, replace arg1, arg2, arg3 respectively by the current node, the pointer to the next node and nest + l and call the procedure P.

STEP P7

If the procedure P is called for every branch, return to a caller. Otherwise, go to P6.

According to this procedure, while the nodes are selected successively, the same operation is performed for each node, resulting in searching the whole tree.

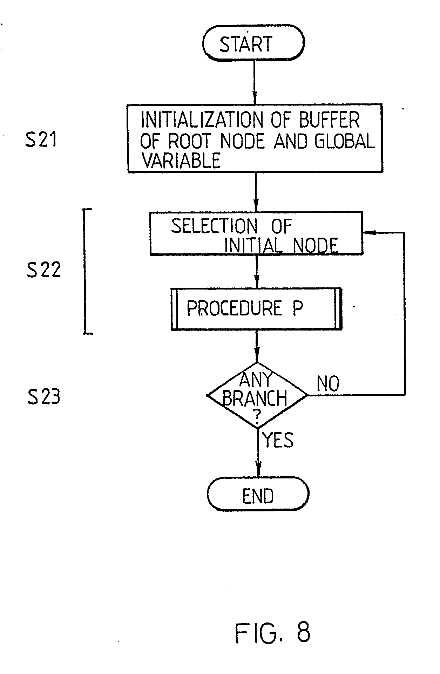

A sequence for processing the entirety of the method being described using the procedure P can be described as follows (refer to Figure 8).

Calculation Process

STEP S21

Store an initial value g(i, 0) for each "i" in the buffer corresponding to a root node (Root in Figure 2).

Input a sufficiently large initial value to the min__dist.

STEP S22

Select a branch in the ascending order of distance from a1 and regard it as an initial node. Initialize arg1, arg2, arg3 respectively to the pointer to the root node, the pointer to the initial node and 1, and call the procedure P.

STEP S23

If the calculation has been completed for every branch, the minimum distance has been obtained in the min__dist and the identifier of the label sequence (access path) providing the minimum distance has been obtained in the opt__path, therefore these values are referred to. If there is a branch remaining, go to STEP S22.

A back track and a processing required for it will be explained by referring to Figure 2. Assume that an end of the tree structure reached for the first time is "k". A distance value D for a label sequence "afhik" is stored in the min__dist at this time and the identifier P1 is stored in the opt__path. When the back track is performed from "k" to "i", none branches from "i". Therefore the back track is further performed from "i" to "h". Such an operation is repeated to reach "a".

For convenience of the explanation, the fact that $B_1$, one of the branches branching from "a", has been selected is recorded. Since $a_{i_0}$ providing the minimum stage calculation value for "a" can be known by referring to the buffer of "a", which of "b", "m" is closer to $a_{i_0} + 1$ can be known. When "b" is selected, the procedure P is called for "b".

When predicted value $D'$ obtained according to STEP P5 based on the minimum value of the stage calculation result for "b" is larger than D, all the processings for the branch $B_2$ are aborted. In such a way, D is used as a threshold, thereby, the stage calculation for many nodes can be omitted. This is the main feature of the arrangement being described.

If $D'$ is smaller than D, either "c" or "p" is selected and the procedure P is recursively called. If "d" is reached, whether optimum solution information should be updated or not is judged. If a distance $D''$ for a template P2 is larger than D, the optimum solution information is not updated. If $D''$ is smaller than D, $D''$ is stored in the min__dist and P2 is stored in the opt__path, respectively.

The present invention has been explained by describing a specific embodiment above. However, the scope of the invention is not limited to the foregoing embodiment. A necessary condition for application of the invention simply resides in that dynamic programming is applicable to the distance between the label sequences to be compared and the calculation using a recurrence formula can be performed consequently. Accordingly, any change or modification may be applied without deviation from the aim of the invention. The modified examples will be described hereinafter.

1) The expression (1) is a distance scale which considers a path length of mapping or joining. However a distance which does not consider a path length of mapping may be used. In this case, $g(n, m)$ is equal to the distance value as it is, so that it is not required to describe the maximum length of following access path(s) for every node of the tree. In STEPs P4 and P5, $g(n, nest)$ and $g(i_0, nest)$ may be directly compared with the min__dist respectively.

2) In the example mentioned above, the recurrence formula between two adjacent terms is used. However a recurrence formula between arbitrary terms can be used by passing not only a pointer to a parent node but also a pointer to a further ancestor node as argument. It is understood that the scope to which the invention is applicable does not depend on the coefficients of respective terms. Actually, a recurrence formula varies according to the definition of the distance or the allowable type of mapping.

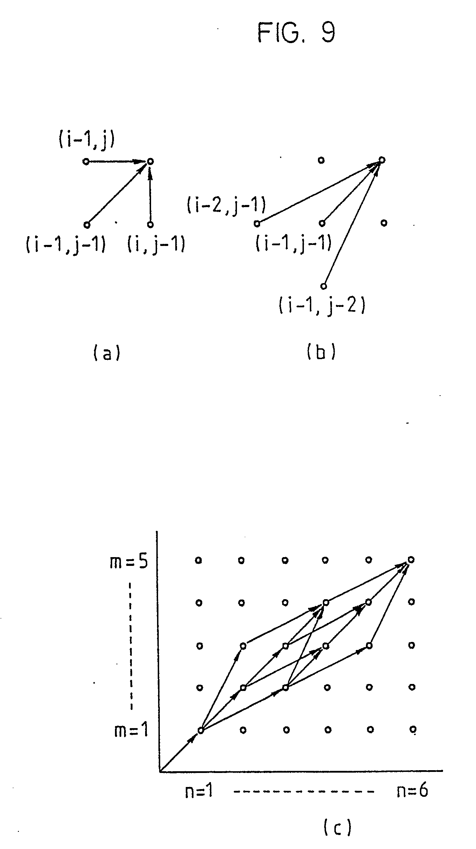

As shown in Figure 9(a), the recurrence formula (2) has three points $(i-1, j)$, $(i, j-1)$, $(i-1, j-1)$ as immediately preceding points to a point $(i, j)$. But it is undesirable to join a plurality of labels to one label or constantly join one to any other in some applications, where a label which coincides with an arbitrary label is added to both ends of two label sequences to be compared, for instance, and the relation of $d(a_1, b_1) = d(a_n, b_m) = 0$ is provided, and then the recurrence formula as described below is used (refer to Figures 9(b) and (c)).

$$g(i, j) = \min \begin{cases} g(i-2, j-1) + d(a_i, b_j) + \alpha \\ g(i-1, j-1) + d(a_i, b_j) \\ g(i-1, j-2) + d(a_i, b_j) + \alpha \end{cases} \quad \ldots\ldots \quad (3)$$

$\alpha$ indicates a penalty for not being joined.

The present method is also applicable to this case.

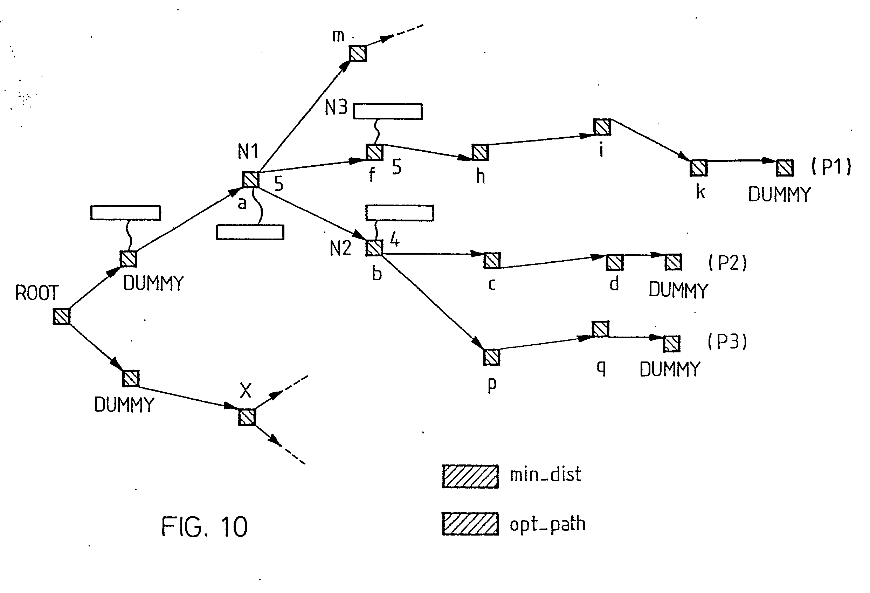

In Figure 9(c), the lattice points with $m=1$, $n=1$, $m=5$, $n=6$ are derived from newly added dummies. One example of the tree structured dictionary modified in response to the addition of the dummies is shown in Figure 10. In this example, the nodes of the dummies are added to the root side and the end side. It should be noted that, as a result of the use of the recurrence formula (3), "i" may be selected as a label next to "f", for instance, in the template P1. In this case, however, the stage calculation for a label "h" has to be performed, because the result of the stage calculation for the label "h" is required in order to judge whether the label "h" should be skipped or not. The arrival at the dummy label at the end is judged to be the arrival at the end of one template and whether optimum solution information should be updated or not is investigated at this time.

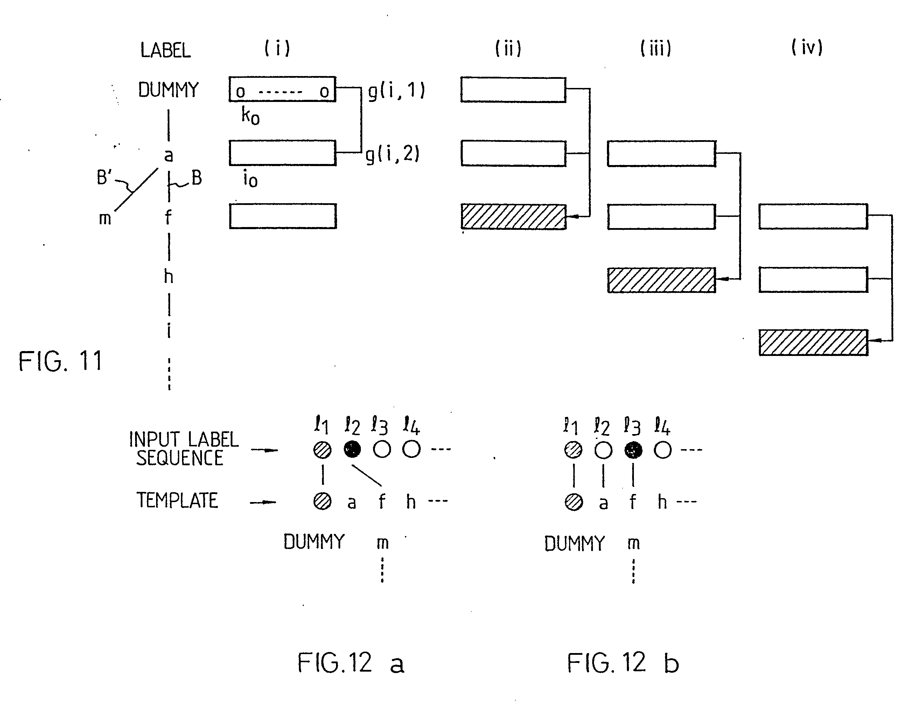

With reference to Figure 11, a method for advancing the stage calculation in case of allowing a skip will be explained.

(i) Assuming that the present position is the node of the label "a", it is required to consider both the minimum value $g(i_0, 2)$ in the stage (a) and the minimum value $g(k_0, l)$ in the stage (dummy) + $\alpha$ (penalty for a skip) = $\alpha$ when judging which of "m" or "f" should be selected as a label subjected to the stage calculation next to "a". Assume that $i_0 = 2$. When which of branches B, B' is similar to the input label sequence is judged, a label "t" having a smaller distance from 12 in the input label sequence is selected from "m" and "f" correspondingly to the case when "a" is initially skipped (refer to Figure 12(a)), and a label t' having a smaller distance from $l_3(i_0 + l)$ from "m" and "f" correspondingly to the case when "a" is not skipped (refer to Figure 12 (b)). Then, $g(k_0, l) + \alpha + d(l_2, t)$ is compared with $g(i_0, 2) + d(l_3, t')$. When the former is larger than the latter, "a" is not skipped. When the former is smaller than the latter, "a" is skipped.

(ii) When "f" is selected as a result of (i), the stage calculation (shown with slanting lines in the Figure) is performed for the node of "f" based on the formula (3) by referring to the stage calculation results performed for the parent node (a) and the grandparent node (dummy).

(iii) Since "h" is the only one label following "f", the stage calculation is performed based on the stage calculation results of the grandparent node (a) and the parent node (f) similarly to (ii).

(iv) A processing operation similar to (iii) is repeated.

The important points of the foregoing explanation are as follows.

(A) In case the skip is permitted, it is necessary to judge whether the skip is advantageous or not as in the above-mentioned (i) when a node for the next stage calculation is selected from some candidates.

For the judgement of (A), the stage calculation for the label to be skipped has to be completed, so that the stage calculation is advanced stage by stage as in (ii) to (iv) (as long as every other label is not necessarily skipped.).

In this connection, $l_1$ in Figure 12 is a dummy.

3) In the embodiment of the invention described, a locally best next node is selected based on the mapping which makes $g(i, j)$ minimum in the stage in question. But another criterion may be added. For instance, generally in the dynamic programming calculation, a calculation range (range of i) is often limited for each stage in order to avoid an extremely distorted mapping. According to a similar intention, the extent of distortion of mapping should be considered for selecting a locally best branch, too.

4) A recursive procedure is convenient since the representation is simplified. But this is not an essential point of the invention. Since the non-recursive description of the procedure of the same type is easy for those skilled in the art, the detailed explanation thereof will be omitted.

5) According to the method of the invention, when the processing of the node in question is completed, it is required to perform the back track. Although the back track is simply executed to a parent node in the embodiment, a shift to a further ancestor node may be carried out based on the consideration of the difference between $g(i, j)$ and the mid_dist, and the number of the levels counted from the root.

The invention has the following advantages.

1) Since the tree structured dictionary where multiple templates correspond to the access paths respectively is formed, the duplicated calculation for the recurrence formula may be performed once for the templates having the same common label subsequence starting from the head.

2) Optimum solution can be assuredly obtained.

3) The dynamic programming calculation is performed in a depth-first manner, while selecting the best matching branch, so that the access path with the minimum distance can be detected relatively fast. The dynamic programming calculation is carried out for other template groups using the minimum distance value obtained consequently as the threshold, and the calculation for the template group in question is aborted when the intermediate result of the dynamic programming exceeds the threshold. Therefore, the total number of the calculations for the recurrence formula is appreciably reduced in comparison with the case where it is performed for each template. Especially, in a pattern recognition field where at least one of the templates is very similar to an input (namely, distance therebetween is extremely small), the invention is very effective.

4) Slightly more storage capacity is required because the tree structure is employed. However, operations for sorting the templates into groups, adding or deleting them can be performed appreciably more easily and faster, particularly as compared with the acyclic graph.

When the arrangement described above was applied to a pattern matching in handwritten numeral recognition (the number of templates was approximately 1000), speed about ten times as fast as the calculation for each template could be attained.

**Claims**

1. An apparatus for matching label sequences representing input data with label sequences representing stored data comprising:

a) a storage device (12),

b) means for receiving the label sequences representing stored data and forming a tree-structured dictionary where each label corresponds to a respective node, storing it in said storage device and providing each label node in the tree-structure dictionary with a buffer area in said storage device,

c) means for repeatedly selecting a node in the tree-structured dictionary in the direction of depth, performing a stage calculation between the label corresponding to the selected node and an input label sequence and storing the result in the buffer provided for the selected node and repeating these operations, and

d) means for obtaining, after the performance of the stage calculation for the node which corresponds to the end of one template, a distance between the template and the input label sequence based on the stage calculation result obtained for the end node and storing it with the identification data of the template as solution candidate information into said storage device,

9

characterised in that said means for repeatedly performing operations on selected nodes comprises

    c1) means for performing the stage calculation for the selected node by referring to the stage calculation result stored in the buffer for an immediate ancestor node of the selected node,

    c2) means for determining a label in the input label sequence providing the minimum value of the stage calculation result, and

    c3) means for determining a label having the minimum distance from the label immediately after the label determined in the operation defined in (c2) in the input label sequence from labels corresponding to a descendant node(s) of the selected node and selection of the node of the determined label as a node for a next stage calculation.

2. An apparatus as claimed in Claim 1 characterised in that said means defined in (c) predicts a minimum value obtainable as a distance between a template which includes the label corresponding to the selected node and the input label sequence based on the minimum value of the calculation result obtained by performing the operation defined in (c1), compares said predicted value with the distance stored as the solution candidate information and judges whether the operations defined in (c2) and (c3) should be performed or not from the comparison result.

3. An apparatus as claimed in Claim 1 or Claim 2 characterised in that said means defined in (d) compares a distance $D'$ obtained from the template including the end node with a distance D stored as solution candidate information each time the stage calculation is performed for the node which corresponds to the end of one template and judges whether the solution candidate information should be updated or not from the comparison result.

4. A method matching label sequences representing input data with label sequences representing stored data comprising the steps of:

a) generating from label sequences representing stored data a tree-structured dictionary where each label corresponds to a respective node and storing it in a storage device,

b) providing each label node in said tree-structured dictionary with a buffer area in said storage device,

c) repeatedly selecting a node in the tree-structured dictionary in the direction of depth, performing stage calculation between the label corresponding to the selected node and an input label sequence and storing the result in the buffer provided for the selected node,

d) after performing the stage calculation for the node which corresponds to the end of one template, determining the distance between the template and the input label sequence based on the stage calculation result obtained for the end node and storing it with the identification data of the template as solution candidate information into said storage device,

characterised in that step (c) further comprising the sub-steps of:

    c1) performing the stage calculation for the selected node by referring to the stage calculation result stored in the buffer for an immediate ancestor node of the selected node,

    c2) determining a label in the input label sequence providing the minimum value of the stage calculation result obtained in said sub-step (c1) and

    c3) determining a label having the minimum distance from a label immediately after the label determined in the sub-step (c2) in the input label sequence from the labels corresponding to descendant node(s) of said selected node and selecting the node of the determined label as a node for a next stage calculation.

5. A method as claimed in Claim 4 characterised in that step (c) further comprises the steps of predicting the minimum value obtainable as a distance between a template which includes the label corresponding to the selected node and the input label sequence based on the minimum value of the calculation result obtained by performing the sub-step (c1), comparing the predicted value with the distance stored as solution candidate information and judging whether the sub-steps (c2) and (c3) should be performed or not from the comparison result.

6. A method as claimed in Claim 4 or Claim 5 characterised in that step (d) further comprises the steps of comparing a distance $D'$ obtained for the template including the end node with a distance D stored as the solution candidate information each time the stage calculation is performed for the node which corresponds to the end of one template and judging whether the solution candidate information should be updated or not from the comparison result.

B

FORMATION OF
TREE-STRUCTURED
DICTIONARY

A

TREE-STRUCTURED
DICTIONARY                    11

PATH ID

DISTANCE

SOLUTION
CANDIDATE
INFORMATION

12

DP CALCULATION

NODE SELECTION          13

EXECUTION OF
STAGE CALCULATION       14

DECISION FOR
ABORTING STAGE
CALCULATION             15

UPDATE OF SOLUTION
CANDIDATE INFORMATION    16

FIG. 1

min_dist

opt_path

FIG. 2

FIG. 3

TEMPLATE
GROUP
(DICTIONARY)

$$\begin{bmatrix} a\ b\ c\ d\ e\ f \\ \vdots \\ b\ c\ o\ p\ q \\ \vdots \\ y\ y\ z\ w\ w \end{bmatrix}$$

FIG. 4

INPUT     b e o p q r

THRESHOLD

ABORTED

| | | b | e | o | p | q | r |
|---|---|---|---|---|---|---|---|
| 3.2 | f | | | | | | |
| 3.0 | e | | | | | | |
| 2.8 | d | | | 3 | 4 | | |
| 2.6 | b | | 3 | 2 | 3 | | |
| 2.4 | c | 3 | 2 | 3 | | | |
| 2.2 | a | 2 | 3 | - | - | - | - |

COMPLETED

| | b | e | o | p | q | r |
|---|---|---|---|---|---|---|
| q | | | | 3 | 2 | 3 |
| p | | 3 | 4 | 3 | 2 | 3 |
| o | | 2 | 3 | 2 | 3 | |
| c | 1 | 2 | 3 | 4 | | |
| b | 0 | 1 | 2 | 3 | | |

ABORTED

| | b | e | o | p | q | r |
|---|---|---|---|---|---|---|
| w | | | | | | |
| w | | | | | | |
| z | | | | | | |
| y | 3 | 4 | | | | |
| y | 2 | 3 | | | | |

EP 0 389 271 A2

PATH 1

A  B  C  D

PATH 2

(a)

(b)

STACK LEVEL

3
2
1

COPY

PATH1
PATH2

min COPY

G(1), ---- , G(n)

A → B          B          B → C          C          C → D

(c)

FIG. 5

EP 0 389 271 A2

START

S11     INITIALIZATION OF CURRENT NODE AND LABEL POINTER

S12     LABEL READING, END JUDGEMENT

S13     SELECTION OF BRANCH,
MOVEMENT OF NODE

S14     NODE FORMATION, MOVEMENT

S15     UPDATE OF LABEL POINTER

S16     WRITING OF IDENTIFIER AND FLAG

END

FIG. 6

FIG. 7

START

S21 | INITIALIZATION OF BUFFER OF ROOT NODE AND GLOBAL VARIABLE

S22 | SELECTION OF INITIAL NODE

PROCEDURE P

S23 | ANY BRANCH ? — NO / YES

END

FIG. 8

# FIG. 9

(a)

(b)

(c)

FIG. 10

EP 0 389 271 A2

FIG. 11

FIG.12 a  FIG.12 b